# FASCICULE DE BREVET EUROPEEN

(11) **EP 1 644 157 B1**
(45) Date de publication et mention de la délivrance du brevet: **24.01.2007**
(21) Numéro de dépôt: 00956620.9
(22) Date de dépôt: 04.08.2000
(51) Int. Cl.: B23P 11/00, B21D 53/84, F16H 53/02, F01L 1/047

(54) **OUTILLAGE POUR LA FABRICATION D'ARBRES A CAMES PAR DUDGEONNAGE**
WERKZEUG ZUR HERSTELLUNG VON NOCKENWELLEN DURCH EINWALZEN
TOOL FOR PRODUCING CAMSHAFTS BY EXPANDING

(30) Priorité: 24.08.1999 FR 9910731
(43) Date de publication de la demande: 12.04.2006
(73) Titulaire: Renault s.a.s., 92100 Boulogne Billancourt (FR); Fabricom Systemes D'Assemblage, 25000 Besancon (FR)
(72) Inventeur: DION, Alain, F-78280 Guyancourt (FR); DARLIX, Olivier, F-92210 Saint Cloud (FR); MONTAZ, Gérard, F-25115 Pouilley les Vignes (FR); DARAGON, Benoît, F-25115 Pouilley les Vignes (FR)
(74) Mandataire: Srour, Elie
(86) Numéro de dépôt international: PCT/FR2000/002247
(87) Numéro de publication internationale: WO 2001/014097

(56) Documents cités:
- EP-A- 0 278 676
- EP-A- 0 389 070
- EP-A- 0 592 068
- US-A- 5 054 182

## Description

La présente invention se rapporte à la réalisation d'arbres à cames, notamment pour les moteurs à explosions à pistons alternatifs. Plus particulièrement, elle concerne un dispositif pour maintenir en orientation, autour d'un arbre tubulaire, une came plate à contour ovoïde et percée d'un orifice traversé par ledit arbre, en vue de la fixation de la came sur ce dernier par dudgeonnage dudit arbre, ainsi qu'une matrice comportant plusieurs de ces dispositifs et une machine de fabrication d'arbres à cames pourvue d'au moins une telle matrice.

Par exemple par les brevets américains 4 781 076 et 4 858 295, on connaît déjà un procédé de fabrication d'un tel arbre à cames par dudgeonnage, consistant à disposer lesdites cames le long d'un arbre tubulaire qui les traverse, puis à dilater radialement ledit arbre, avec déformation plastique, par forçage d'un dudgeon d'expansion à l'intérieur de celui-ci, afin de fixer lesdites cames sur ledit arbre. Pour assurer de telles fixations, l'orifice desdites cames comporte des irrégularités de contour dans les creux desquelles pénètre la matière périphérique de l'arbre radialement expansé.

EP-0 592 068 A montre un dispositif selon le préambule de la revendication 1.

La présente invention a pour objet la réalisation d'un outillage avantageux pour la mise en oeuvre d'un tel procédé.

A cette fin, l'invention concerne tout particulièrement un dispositif selon la revendication1, pour maintenir en orientation, autour d'un axe de référence, une came plate à contour périphérique ovoïde et percée d'un orifice apte à être traversé par un arbre tubulaire, dont l'axe est alors confondu avec ledit axe de référence, en vue de la fixation de ladite came sur ledit arbre par dudgeonnage de ce dernier, ce dispositif comportant:
- un corps pourvu d'un passage transversal pour ledit arbre et d'un conduit d'introduction de ladite came, ledit conduit d'introduction débouchant, d'un côté, dans ledit passage transversal et, de l'autre, à la périphérie dudit corps;
- des moyens pour maintenir ladite came dans son conduit d'introduction dans une position d'attente dans laquelle son orifice est au moins approximativement coaxial audit passage transversal ;
- deux premiers coulisseaux espacés et parallèles, montés solidaires en translation dans ledit corps, de façon au moins sensiblement orthogonale audit passage transversal pour ledit arbre, lesdits premiers coulisseaux étant élastiquement écartés dudit passage transversal par des premiers moyens élastiques avec leurs extrémités externes faisant saillie à l'extérieur dudit corps, d'un côté de celui-ci, et leurs extrémités internes disposées en regard d'une partie du contour ovoïde de ladite came, lorsque celle-ci est dans ladite position d'attente;
- deux seconds coulisseaux espacés et parallèles, antagonistes desdits premiers coulisseaux et montés solidaires en translation dans ledit corps, de façon au moins sensiblement orthogonale audit passage transversal pour ledit arbre, lesdits seconds coulisseaux étant élastiquement écartés dudit passage transversal par des seconds moyens élastiques avec leurs extrémités externes faisant saillie à l'extérieur dudit corps, d'un autre côté de celui-ci, et leurs extrémités internes disposées en regard d'une autre partie du contour ovoïde de ladite came, lorsque celle-ci est dans ladite position d'attente ; et
- une liaison mécanique reliant lesdits premiers et seconds coulisseaux, telle que, lorsque lesdits premiers coulisseaux sont pressés à l'encontre de l'action desdits premiers moyens élastiques pour déplacer les extrémités internes desdits premiers coulisseaux en direction de ladite partie du contour ovoïde de ladite came jusqu'au contact avec celle-ci, lesdits seconds coulisseaux sont pressés par ladite liaison mécanique, à l'encontre de l'action desdits seconds moyens élastiques pour déplacer les extrémités internes desdits seconds coulisseaux en direction de ladite autre partie du contour ovoïde de ladite came jusqu'au contact avec celle-ci.

Ainsi, dans le dispositif de l'invention, chaque came est, à partir de sa position d'attente, pressée dans des directions antagonistes par lesdits premiers et seconds coulisseaux, ce qui lui permet de se déplacer et de tourner autour de son axe pour, d'une part, rattraper l'écart de sa position angulaire dû à l'imprécision d'introduction dans ledit conduit, par exemple par un robot, et, d'autre part, compenser les erreurs de précision dans la réalisation de ladite came. On comprend donc aisément que ladite came est alors centrée et orientée de façon précise, quelle que soit la précision de sa réalisation et de sa présentation dans le conduit d'introduction.

Il en résulte que, pour un contour de came et une orientation angulaire de came déterminés, les longueurs relatives desdits premiers et seconds coulisseaux sont elles-mêmes déterminées. Pour pouvoir ajuster ces longueurs relatives, et donc le centrage et l'orientation de chaque came, il est avantageux que lesdits premiers et seconds coulisseaux soient réglables en longueur. A cet effet, ils peuvent comporter une partie de longueur fixe et une partie de longueur ajustable, par exemple constituée d'un jeu de cales interchangeables, de longueurs différentes permettant d'ajuster la position angulaire de la came. De plus, pour améliorer encore le centrage et l'orientation de la came, il est avantageux que l'écartement entre lesdits premiers coulisseaux et l'écartement entre lesdits seconds coulisseaux soient déterminés en fonction du contour de la came et de l'orientation angulaire de celle-ci autour dudit arbre. Ces écartements sont choisis pour assurer un bras de levier aussi grand que possible à chaque coulisseau afin de faciliter l'orientation, tout en assurant une prise solide de ladite came par lesdits premiers et seconds coulisseaux dans ladite position d'attente.

Afin de faciliter le contact entre, d'une part, le contour de la came et, d'autre part, les extrémités internes desdits premiers et second coulisseaux, ces dernières sont pourvues d'organes de roulement, tels que des galets aptes à rouler sur ledit contour périphérique ovoïde.

Avantageusement, lesdits moyens de maintien de ladite came dans son conduit d'introduction en position d'attente comportent un presse-flan pressé élastiquement en direction d'une plaque de référence de position solidaire dudit dispositif, ledit presse-flan étant écarté élastiquement de cette plaque de référence lors de l'introduction à plat de ladite came entre ledit presse-flan et ladite plaque de référence. On voit qu'ainsi ladite came est maintenue par frottement en étant pressée entre ledit presse-flan et ladite plaque de référence et que la position de la came le long dudit arbre tubulaire est facilement ajustable en disposant des cales d'épaisseur devant et/ou derrière ladite plaque de référence. De préférence, lesdits moyens de maintien de la came comportent un système de butée contre lequel ledit presse-flan est pressé élastiquement lorsqu'aucune came ne se trouve en position d'attente, ce système de butée imposant, entre ledit presse-flan et ladite plaque de référence, un écartement minimal, qui est inférieur à l'épaisseur de ladite came. Notamment dans ce cas, ledit presse-flan peut comporter un chanfrein sur lequel ladite came, lors de son déplacement dans ledit conduit d'introduction en direction de sa position d'attente, exerce une pression entraînant l'écartement élastique dudit presse-flan par rapport à ladite plaque de référence.

Dans un mode de réalisation particulièrement avantageux du dispositif conforme à la présente invention, lesdits moyens de maintien forment une unité mécanique rapportée et fixée dans ledit circuit d'introduction. Ainsi, on peut prévoir une pluralité d'unités différentes, chacune spécifiquement adaptée à une came particulière et interchangeable avec les autres unités. Ainsi, ledit dispositif peut être utilisé pour des cames de dimensions et formes différentes.

Pour pouvoir être facilement assemblé de façon compacte à d'autres dispositifs semblables, le corps dudit dispositif conforme à la présente invention se présente avantageusement sous la forme d'une plaque épaisse à faces parallèles. A des fins de plus grande compacité d'un assemblage d'une pluralité de tels dispositifs, les coulisses pour lesdits premiers et seconds coulisseaux peuvent être usinées dans une première desdites faces parallèles de ladite plaque, tandis que ledit conduit d'introduction n'est que partiellement usiné dans cette même première face, la seconde face de ladite plaque étant usinée pour former partiellement le conduit d'introduction d'une autre plaque dont la première face peut être appliquée contre ladite seconde face de ladite plaque.

Ainsi, la présente invention concerne également une matrice pour la fabrication par dudgeonnage d'un arbre à cames tubulaire, notamment pour un moteur à explosions, lesdites cames étant réparties le long dudit arbre avec des orientations spécifiques, ladite matrice comportant autant de dispositifs semblables à celui décrit ci-dessus que ledit arbre possède de cames, lesdits dispositifs étant assemblés les uns à la suite des autres de façon que leurs passages transversaux soient alignés pour former un canal pour ledit arbre tubulaire et que leurs conduits d'introduction de came se trouvent respectivement à l'emplacement d'une came le long dudit arbre. Dans une telle matrice constituée d'une suite de tels dispositifs à corps en forme de plaque épaisse, afin de respecter les emplacements que doivent occuper lesdites cames, le long dudit arbre, on peut :
- soit déterminer l'épaisseur de la plaque épaisse constituant le corps de chaque dispositif en fonction desdits emplacements ;
- soit réaliser tous lesdits dispositifs avec des plaques épaisses d'épaisseur identique et prévoir des cales d'épaisseur destinées à être disposées entre lesdits dispositifs.

Une telle matrice peut être montée, seule ou avec au moins une matrice identique, sur une machine pour la fabrication d'arbres à cames par dudgeonnage pourvue d'un organe d'actionnement unique pour presser en commun l'ensemble desdits premiers coulisseaux de ladite matrice, ledit organe d'actionnement étant monté sur ladite machine indépendamment de ladite matrice. Ainsi, l'organe de commande de la matrice est intégré à la machine et non pas à la matrice, de sorte que la matrice peut facilement être montée et démontée sur la machine, par exemple pour être échangée avec une autre. On remarquera que de tels montages et démontages sont facilités du fait que la matrice, constituée d'un assemblage de plaque, est compacte. Elle est donc facile à manoeuvrer et peut être montée et démontée automatiquement sur la machine.

Pour augmenter encore la compacité et la facilité de montage et de démontage de la matrice, on prévoit de plus que la butée destinée à bloquer, pendant le dudgeonnage de l'arbre tubulaire, une extrémité de celui-ci, est également montée sur ladite machine --et non pas sur la matrice-- indépendamment de ladite matrice, en regard dudit canal pour ledit arbre tubulaire.

De préférence, la machine conforme à la présente invention comporte au moins deux telles matrices, chacune apte à passer d'au moins un poste de chargement en cames à au moins un poste de dudgeonnage, puis, après déchargement de l'arbre à cames dudgeonné, dudit poste de dudgeonnage audit poste de chargement.

On voit ainsi que, grâce à la présente invention, la machine de dudgeonnage présente de nombreux avantages :
- du fait qu'elle utilise des dispositifs de centrage et d'orientation de came indépendants les uns des autres et spécifiques à chaque came, elle présente une grande modularité ;
- la prise de chaque came par les coulisseaux étant symétrique, la précision du centrage et de l'orientation de chaque came est élevée, quelles que soient les précisions d'introduction et de réalisation desdites cames ;
- la compacité est assurée par la constitution de la matrice par des dispositifs en forme de plaques appliqués les uns contre les autres et assemblés entre eux ;
- l'interchangeabilité de la matrice est aisée puisque celle-ci est compacte et ne porte ni la butée de dudgeonnage, ni l'organe de commande des coulisseaux ;
- les ajustements de position axiale et de position angulaire des cames peuvent aisément être réalisés par des cales, comme décrit ci-dessus ;
- la flexibilité de la matrice est élevée, car elle peut être utilisée pour le dudgeonnage d'arbres à cames de types différents en utilisant une majorité d'éléments standards et un minimum d'éléments spécifiques à un type particulier d'arbre à cames.

Les figures du dessin annexé feront bien comprendre comment l'invention peut être réalisée. Sur ces figures, des références identiques désignent des éléments semblables.

La figure 1 est une vue de dessus d'une matrice de dudgeonnage conforme à la présente invention, destinée à la fabrication d'un arbre à cames tubulaire.

Les figures 2 et 3 sont des vues latérales de la matrice de dudgeonnage de la figure 1 , respectivement selon les flèches II et III de cette dernière figure.

La figure 4 montre, en vue de dessus, deux segments de la matrice des figures 1 à 3, le plus épais de ces segments étant pourvu d'une unité de maintien de came et ayant ses coulisseaux en position écartée, tandis que le segment le moins épais est représenté dépourvu d'unité de maintien de came et avec ses coulisseaux en position rapprochée.

La figure 5 est une vue schématique en élévation, de face, d'un segment de la matrice des figures 1 à 3, représenté avec son unité de maintien de came sortie du conduit d'introduction dudit segment.

Les figures 6 et 7 montrent schématiquement, en coupe selon les lignes VI-VI et VII-VII de la figure 5 respectivement, l'assemblage d'un segment plus épais et d'un segment moins épais, lesdits segments étant représentés sur la figure 7 avec leurs unités de maintien de cames chargées respectivement d'une telle came.

Les figures 8 et 9 montrent, respectivement en vue de face et en vue de dessus avec coupe partielle, une unité de maintien de came pour un segment de la matrice de dudgeonnage conforme à la présente invention.

La figure 10 illustre, en vue de face, un segment de la matrice de dudgeonnage pourvue de son unité de maintien de came, en position d'introduction d'une telle came.

La figure 11 est une vue de dessus de l'unité de maintien de came du segment de la figure 10, juste après l'introduction d'une telle came entre son presse-flan et sa plaque de référence.

Les figures 12, 13 et 14 illustrent, en vues de face schématiques, le centrage et l'orientation angulaire de la came de la figure 1 1 , respectivement pour trois valeurs différentes de ladite orientation angulaire.

La figure 15 est une vue de dessus de l'unité de maintien de came du segment de la figure 10, après centrage et orientation angulaire de la came de la figure 1 1 , dans le cas de la figure 14.

La figure 16 est une vue en plan schématique d'une machine de dudgeonnage comportant deux matrices des figures 1 à 3.

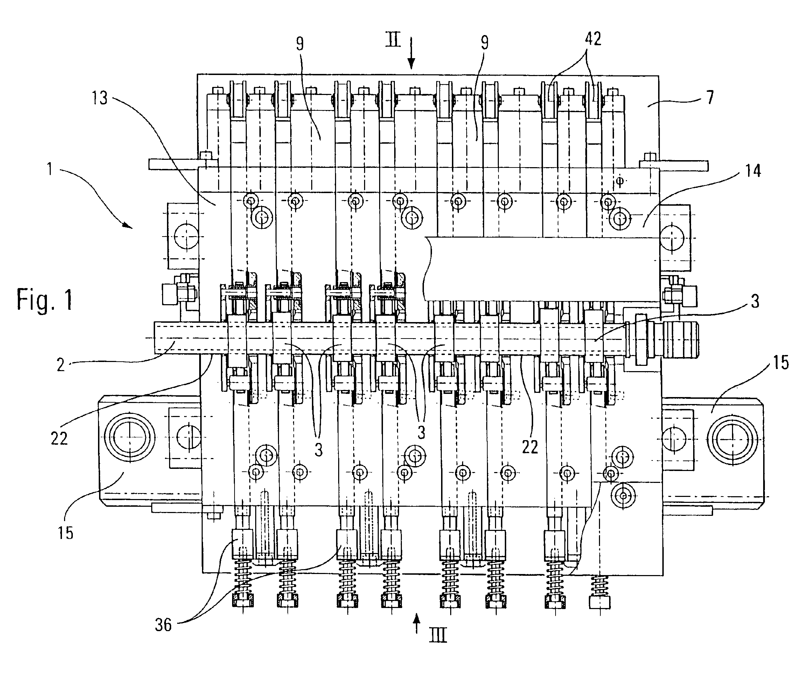

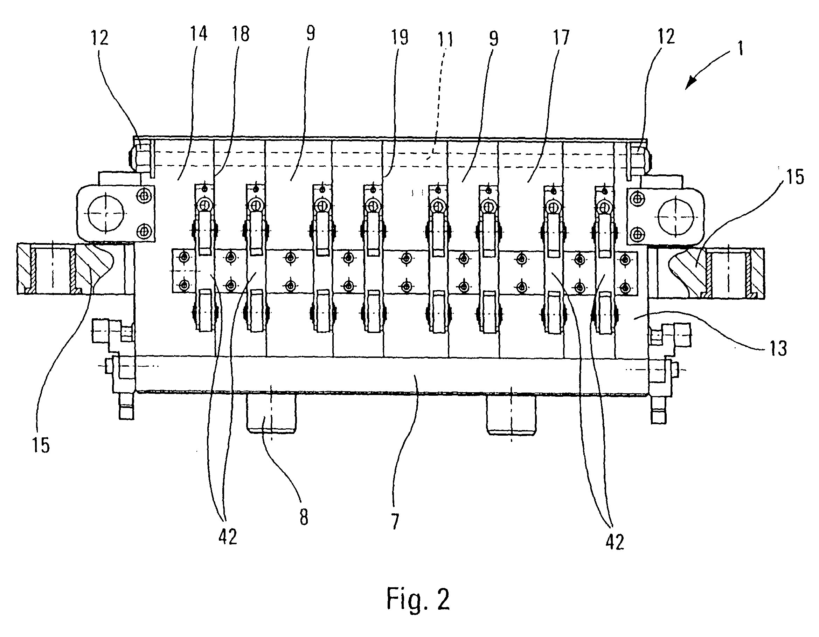

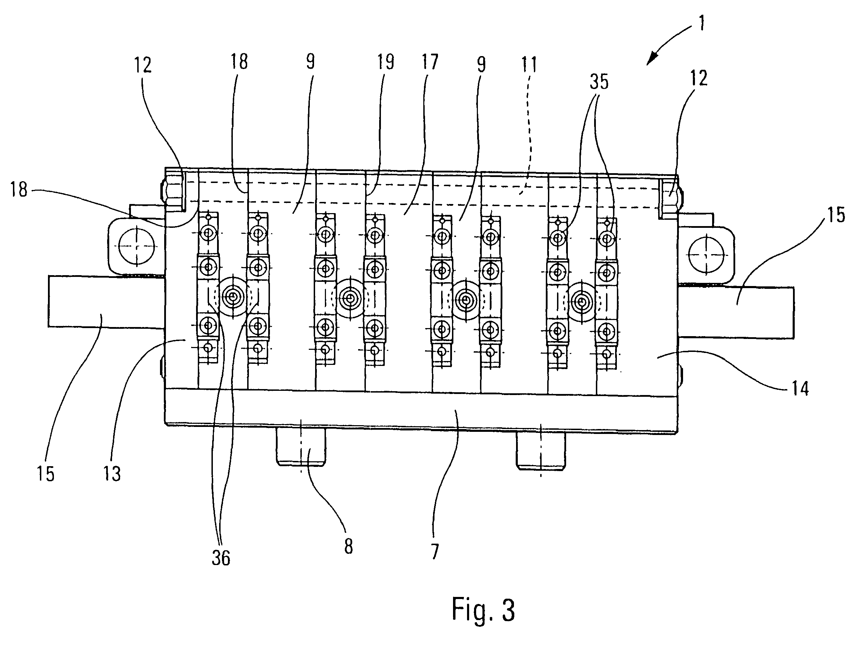

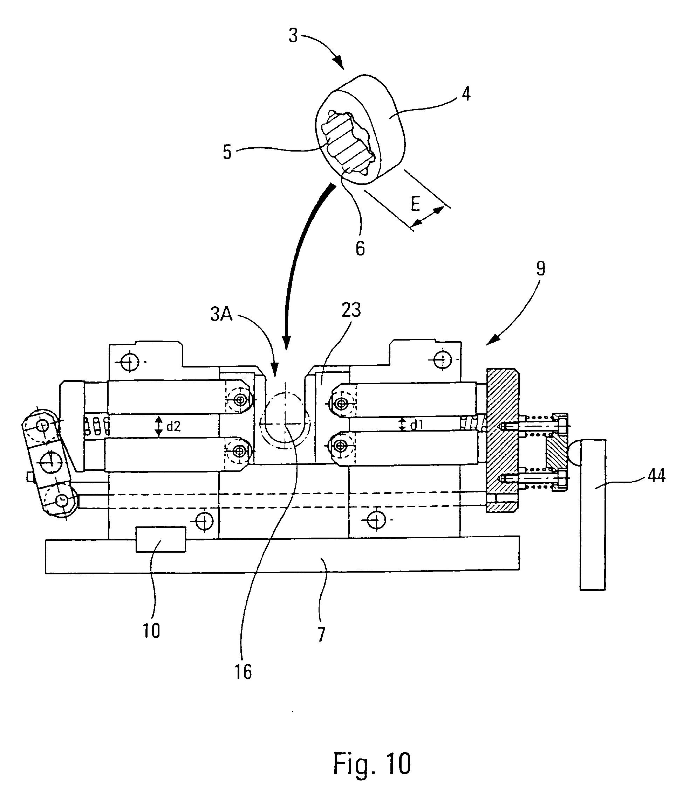

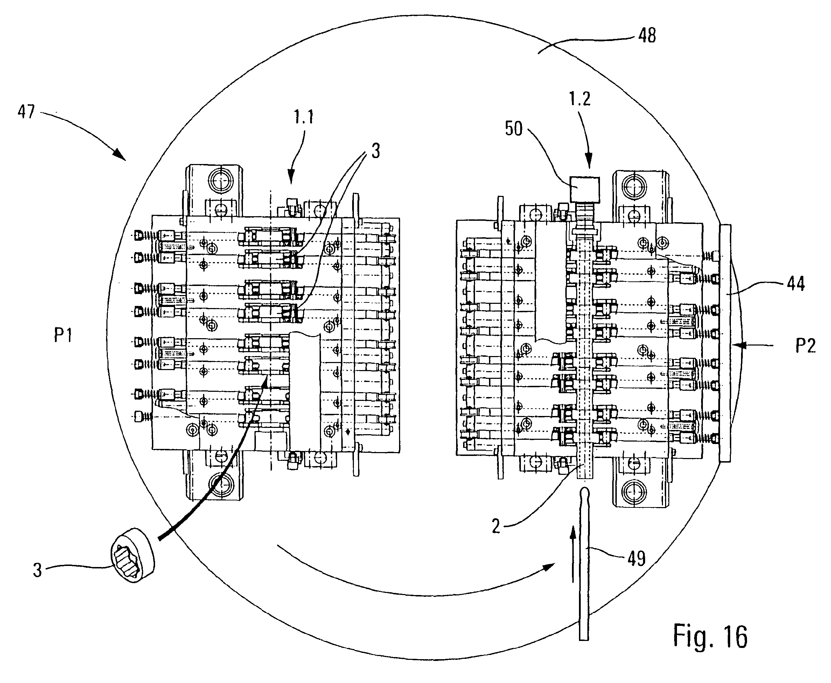

La matrice de dudgeonnage 1, représentée sur les figures 1 à 3, est destinée à la fabrication d'un arbre à cames pour moteur à explosions, constitué d'un arbre tubulaire 2 et d'une pluralité de cames 3 réparties le long dudit arbre tubulaire 2. Comme on peut le voir sur les figures 10 et 16, chaque came 3 est plate et présente un contour périphérique ovoïde 4. De plus, elle est percée d'un orifice cylindrique 5, pourvu d'irrégularités de surface 6. Sur la figure 1, la matrice 1 est représentée dans une position pour laquelle toutes les cames 3 sont maintenues avec un centrage précis et des orientations spécifiques correctes et sont traversées par l'arbre tubulaire 2. Dans cette position, l'arbre tubulaire 2 est prêt à être dudgeonné pour que sa paroi cylindrique externe, dilatée plastiquement par un dudgeon, vienne s'incruster dans les orifices 5 et les irrégularités 6, afin de solidariser toutes lesdites cames 3 dudit arbre tubulaire 2.

Dans l'exemple particulier d'arbre à cames représenté sur les figures 1 et 16, on a prévu une répartition des cames 3 par couples, la distance axiale entre les deux cames d'un couple étant plus petite que la distance axiale entre deux couples adjacents.

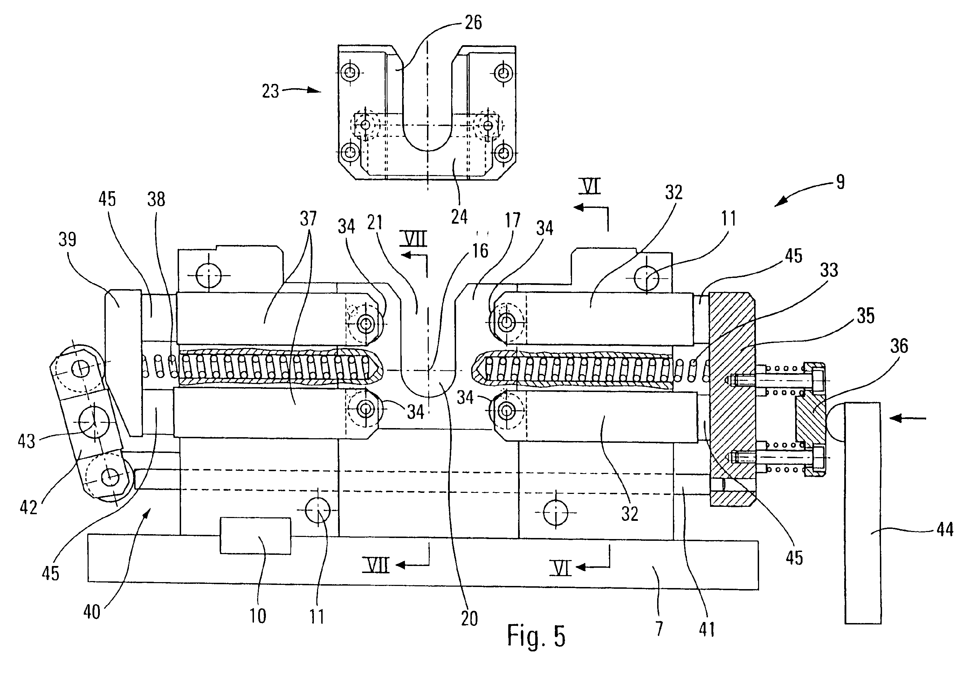

La matrice 1 comporte une platine de base 7 pourvue de moyens de centrage et/ou de fixation 8. Sur la platine de base 7 sont montés une pluralité de segments 9, accolés les uns aux autres. Les segments 9 sont solidarisés de la platine 7 par exemple par des clavettes 10 (voir la figure 5) et sont assemblés entre eux par des tirants 11 pourvus d'écrous d'extrémité 12. L'assemblage des segments 9 est fermé à ses extrémités par des couvercles 13 et 14, dont l'un (13) peut être une simple plaque d'extrémité, alors que l'autre (14) présente une structure semblable à celle des segments 9 et est considéré ci-après comme un segment 9. Les couvercles 13 et 14 sont également pourvus de moyens de centrage et/ou de fixation 15.

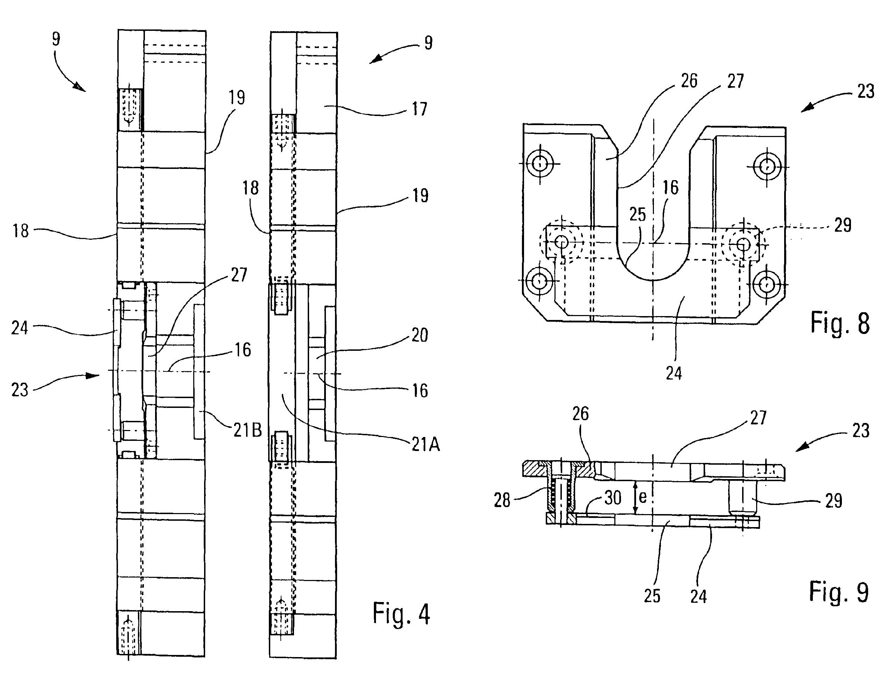

Chaque segment 9, qui est un dispositif pour maintenir une came 3 en orientation autour d'un axe de référence 16 --l'axe de ladite came 3 étant alors confondu avec ledit axe 16--, comporte un corps 17 qui se présente sous la forme d'une plaque épaisse à faces parallèles 18 et 19. Dans la matrice 1 , les segments 9 sont assemblés de façon que la face 18 de l'un soit appliquée contre la face 19 d'un autre. Comme on peut le voir sur les figures 1 à 4, 6 et 7, certains segments 9 ont une épaisseur plus petite pour correspondre à la distance axiale entre les deux cames d'un couple, alors que d'autres segments 9 ont une épaisseur plus grande pour correspondre à la distance axiale entre deux couples de cames adjacents. De manière plus générale, l'épaisseur d'un segment 9 est déterminée par l'emplacement que doit occuper, le long de l'arbre tubulaire 2, la came 3 du segment 9 adjacent dans la matrice 1.

Dans le corps 17 de chaque segment 9 est pratiqué un passage transversal 20 centré sur l'axe de référence 16 et un conduit radial 21 pour l'introduction d'une came 3. Le conduit d'introduction 21 débouche, d'un côté, dans le passage transversal 20 et, de l'autre côté, à la périphérie supérieure du corps 17.

Dans la matrice 1, on prévoit autant de segments 9 --le couvercle 14 de même structure comptant pour un segment 9-- que de cames 3 qui doivent être montées sur l'arbre tubulaire 2 et lesdits segments sont assemblés les uns à la suite des autres de façon que leurs passages transversaux 20 soient alignés pour former un canal 22, d'axe 16, pour recevoir ledit arbre tubulaire 2 et que leurs conduits d'introduction 21 se trouvent respectivement en correspondance avec l'emplacement d'une came 3 le long dudit arbre.

Afin de réduire l'encombrement longitudinal de la matrice, chaque conduit d'introduction 21 est constitué, pour une part, par un évidement 21 A pratiqué dans la face 18 du segment 9 concerné et, pour une autre part, par un évidement 21B pratiqué dans la face 19 du segment adjacent 9 venant s'appliquer contre ladite face 18.

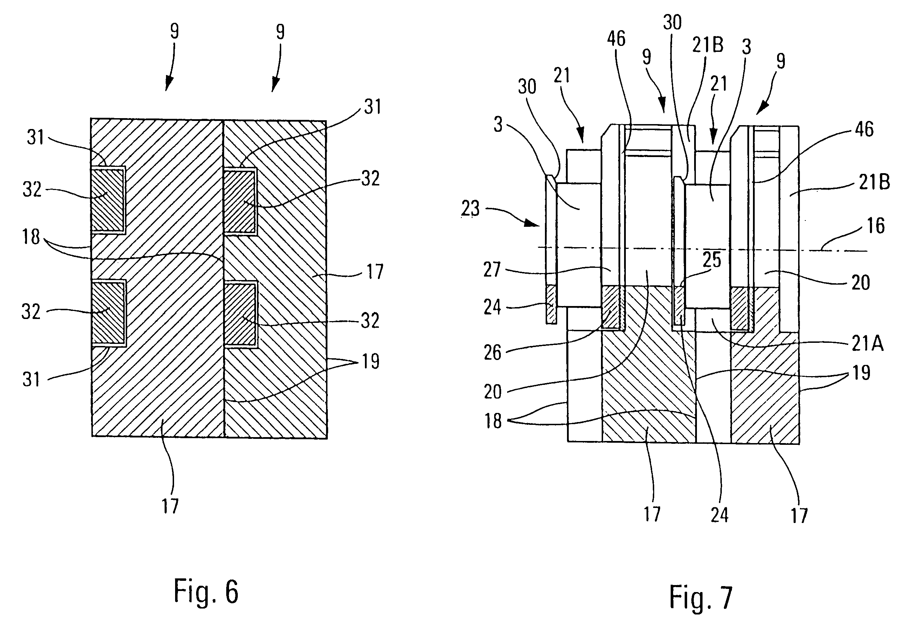

Dans chaque conduit d'introduction 21 sont prévus des moyens 23 pour maintenir une came 3 dans ledit conduit, dans une position d'attente dans laquelle son orifice transversal 5 est au moins approximativement coaxial au passage transversal 20 correspondant, c'est-à-dire à l'axe de référence 16. Chaque moyen 23 d'un segment 9 (voir les figures 7, 8 et 9) comporte un presse-flan 24, échancré en 25 dans le prolongement du passage transversal 20 et logé dans l'évidement 21 B du segment 9 adjacent, ainsi qu'une plaque de référence 26, également échancrée en 27 dans le prolongement du passage transversal 20 et logée dans l'évidement 21 A du segment 9 correspondant, auquel elle est fixée. Le presse-flan 24 est pressé élastiquement en direction de la plaque de référence 26 associée par des ressorts 28, qui le plaque contre des butées 29, lorsqu'aucune came 3 ne se trouve en position d'attente dans le moyen de maintien 23. Les butées 29 imposent, entre le presse-flan 24 et la plaque de référence 26, un écartement minimal e qui est inférieur à l'épaisseur E d'une came 3. On conçoit donc aisément que, lorsqu'une came 3 est introduite à plat entre ledit presse-flan 24 et ladite plaque de référence 26, ledit presse-flan 24 est élastiquement écarté des butées 29 et de ladite plaque de référence 26 à l'encontre de l'action des ressorts 28, et que ladite came est maintenue par pression entre le presse-flan et la plaque de référence.

Pour faciliter l'introduction d'une came 3 entre le presse-flan 24 et la plaque de référence 26, ledit presse-flan 24 comporte, sur son bord dirigé du côté de l'entrée du conduit 21, un chanfrein 30 sur lequel ladite came 3, lors de ladite introduction, exerce une pression entraînant, par effet de coin, l'écartement élastique dudit presse-flan 24 par rapport à la plaque de référence 26.

Comme cela est illustré par les figures 5, 8 et 9, l'ensemble du presse-flan 24, de la plaque de référence 26, des ressorts 28 et des butées 29 forment une unité 23, apte à être introduite et fixée dans un conduit d'introduction 21.

De plus, comme cela est particulièrement visible sur les figures 5 et 6, dans la face 18 des segments 9 et du couvercle 14, sont usinées des coulisses rectilignes 31 pour :
- deux premiers coulisseaux 32 rectilignes, espacés et parallèles, disposés d'un côté du passage transversal 20 et montés dans les coulisses 31 correspondantes de façon à pouvoir coulisser en translation par rapport au corps 17 dans une direction sensiblement orthogonale audit passage transversal 20. Les premiers coulisseaux 32 sont élastiquement écartés du passage transversal 20 par un ressort 33 prenant appui sur ledit corps 17. Les extrémités internes des deux coulisseaux 32, dirigées vers le passage transversal 20, sont munies de galets de roulement 34. Les extrémités externes des deux coulisseaux 32 font saillie à l'extérieur du corps 17 et sont solidarisées l'une de l'autre en translation par une barrette de poussée 35, portant un compensateur à ressorts 36 ; et
- deux seconds coulisseaux 37 rectilignes, espacés et parallèles entre eux ainsi qu'aux premiers coulisseaux 32, disposés de façon antagoniste à ces derniers de l'autre côté dudit passage transversal 20 et montés dans leurs coulisses 31 correspondantes de façon à pouvoir coulisser en translation par rapport audit corps 17 dans une direction sensiblement orthogonale au passage transversal 20. Les seconds coulisseaux 37 sont élastiquement écartés du passage transversal 20 par un ressort 38 prenant appui sur le corps 17. Les extrémités internes des deux coulisseaux 37, dirigées vers le passage transversal 20, sont munies de galets de roulement 34. Les extrémités externes des deux coulisseaux 37 font saillie à l'extérieur du corps 17 et sont solidarisées l'une de l'autre en translation par une barrette à came 39.

Par ailleurs, une liaison mécanique 40 relie les deux premiers coulisseaux 32 aux deux seconds coulisseaux 37. Cette liaison mécanique 40 comporte une tige de poussée 41, liée à l'une de ses extrémités à ladite barrette de poussée 35 et à son extrémité opposée à l'une des extrémités d'un levier de renvoi 42, monté pivotant autour d'un axe fixe intermédiaire 43 porté par le corps 17. L'autre extrémité du levier de renvoi 42 s'appuie contre la barrette à came 39. Ainsi, lorsqu'un organe d'actionnement 44 presse la barrette de poussée 35, par l'intermédiaire du compensateur 36, les premiers coulisseaux 32 sont pressés à l'encontre de l'action élastique du ressort 33 de sorte que leurs galets 34, prévus à leurs extrémités internes, se déplacent en direction du conduit d'introduction 21. Il en est de même, de façon symétrique, pour les galets 34 prévus aux extrémités internes des seconds coulisseaux 37, grâce à l'action que la tige de poussée 41 et le levier de renvoi 42 exercent, par l'intermédiaire de la barrette à came 39, sur le ressort 38. Inversement, lorsque l'action de l'organe d'actionnement 44 sur la barrette 35 cesse, les ressorts 33 et 38 repoussent élastiquement lesdits premiers et seconds coulisseaux en les écartant du conduit d'introduction 21. Des butées (non représentées) sont prévues pour limiter la course de retour desdits coulisseaux sous l'action de la détente des ressorts 33 et 38.

La longueur de chacun des coulisseaux 32 et 37 peut être ajustée par des cales interchangeables 45, par exemple respectivement disposées entre la barrette de poussée 35 et les extrémités externes des premiers coulisseaux 32 et entre la barrette à came 39 et les extrémités externes des seconds coulisseaux 37. Les cales 45 peuvent être solidarisées des extrémités externes desdits coulisseaux 32 et 37 et/ou des barrettes 35 et 39 par des liaisons du type à tenon et mortaise, par exemple (non représentées).

Par ailleurs, dans les segments 9, l'écartement d1 entre les premiers coulisseaux 32 et/ou l'écartement d2 entre les seconds coulisseaux peuvent être différents d'un segment 9 à un autre (figure 10).

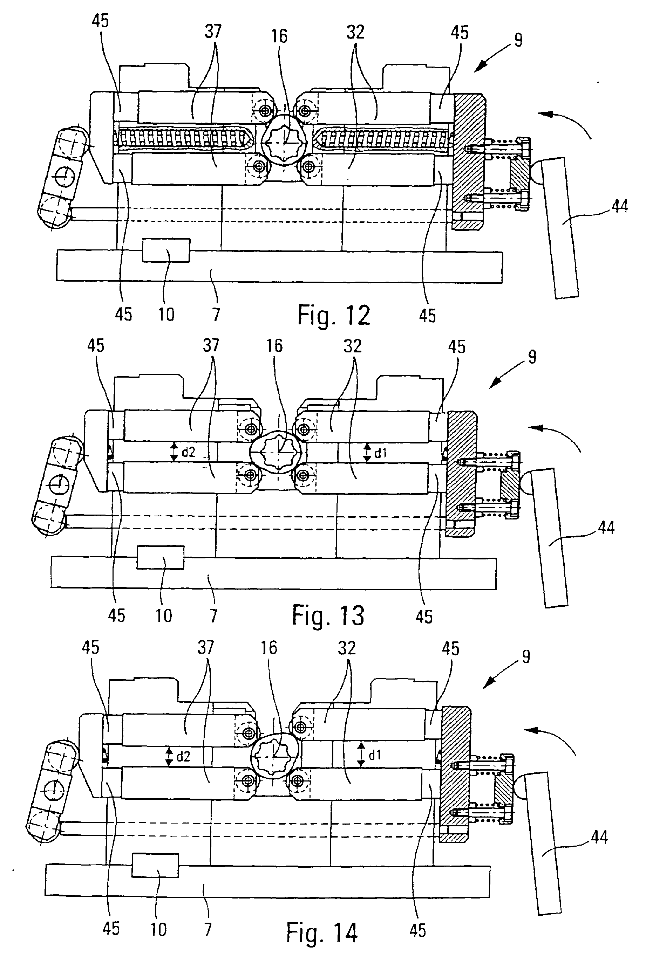

Ainsi, comme cela est illustré par les figures 12 à 14, à une came 3 devant occuper une position angulaire déterminée autour de l'axe de référence 16, on associe un segment 9 dont les écartements d1 et/ou d2 conviennent le mieux à la prise de ladite came. Puis, à l'aide des cales interchangeables 45, on ajuste la longueur desdits coulisseaux 32 et 37 à la valeur optimale pour le maintien de la came 3 dans cette position angulaire déterminée. Dans chaque cas, le choix d'un segment 9 avec ses valeurs d'écartement d1 et d2 particulières est déterminé par le calcul et l'ajustement de la longueur de chacun des coulisseaux 32 et 37 avec des cales 45 spécifiques est effectué par des mesures utilisant des cames-étalons, identiques auxdites cames 3 et disposées dans les positions angulaires souhaitées pour lesdites cames 3. Sur les figures 12, 13 et 14, on a illustré trois exemples de réglages avec des écartements d1 et/ou d2 différents et des cales 45 différentes, ces trois exemples correspondant respectivement, pour les cames 3, à une position verticale pointe en haut, à une position horizontale pointe à gauche et à une position à 45° pointe vers le haut et la droite.

On remarquera de plus que la position axiale de chaque came 3 le long de l'arbre tubulaire 2 peut être ajustée --également par des essaispar une cale d'épaisseur 46 (voir la figure 7), par exemple disposée entre la plaque de référence 27 des moyens 23 et le corps 17 du segment 9 correspondant.

Ainsi, dans la matrice 1, les différents choix d1, d2 et les différents réglages à l'aide de cales 45 et 46 ayant été effectués, on peut procéder au chargement en cames 3.

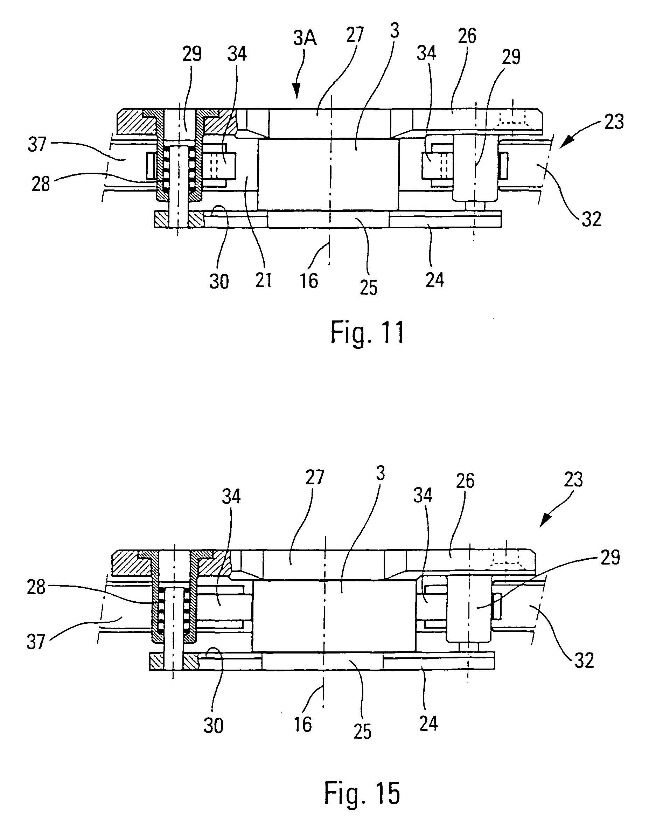

Chaque came 3, par exemple portée par le bras d'un robot (non représenté), est amenée au-dessus du conduit d'introduction 21 correspondant de façon à déborder en partie sur le chanfrein 30 du presse-flan 24 concerné. Le robot descend ladite came 3 qui, en appuyant sur ledit chanfrein 30, repousse le presse-flan 24 à l'encontre de l'action des ressorts 28 et l'écarte de la plaque de référence 26. La came 3 peut donc s'insérer à plat entre ledit presse-flan 24 et la plaque de référence 26, qui la pressent élastiquement entre eux. Le robot amène alors ladite came 3 dans une position d'attente 3A, dans laquelle son orifice 5 est au moins approximativement coaxial à l'axe de référence 16. Une telle position d'attente 3A, dans laquelle ladite came 3 est maintenue par frottement, est illustrée sur les figures 10 et 11.

Après chargement de toutes les cames 3 dans la matrice 1 --chacune de celles-ci se trouvant alors dans sa position d'attente--, l'organe d'actionnement 44, commun à tous les segments 9 de cette dernière, agit sur l'ensemble des barrettes de poussée 35, de sorte que les galets 34 des coulisseaux 32 et les galets 34 des coulisseaux 37 sont déplacés en direction de la partie en regard du contour ovoïde 4 des cames 3, jusqu'au contact avec ledit contour. Les galets 34 des coulisseaux 32 et 37 exercent donc sur les cames 3 des forces et/ou des couples qui ajustent le centrage et l'orientation angulaire desdites cames 3, en correspondance avec les écartements d1, d2 choisis et l'épaisseur des cales 45 interposées. Toutes les cames 3 se trouvent donc alors centrées sur l'axe de référence 16, avec la position et l'orientation angulaire désirées pour l'arbre à cames (voir les figures 12 à 15).

Après introduction dudit arbre tubulaire 2 à travers l'ensemble desdites cames maintenues dans la matrice 1 --soit avant, soit après blocage en position de ces dernières-- on peut dudgeonner ledit arbre tubulaire 2 --après blocage en position desdites cames 3-- pour solidariser lesdites cames 3 et ledit arbre 2.

Pour décharger l'arbre à cames 2, 3 ainsi fabriqué, on commande l'organe d'actionnement 44 pour faire cesser la pression qu'il exerce sur les barrettes de poussée 35. Les ressorts 33 et 38 repoussent alors les coulisseaux 32 et 37, de sorte que l'arbre à cames 2, 3 peut être sorti de la matrice 1.

Sur la figure 16, on a représenté schématiquement une machine 47 pour la fabrication d'arbres à cames dudgeonnés, conforme à l'invention et mettant en oeuvre deux matrices 1 de l'invention, respectivement désignées par les références 1.1 et 1.2. Ces matrices 1.1 et 1.2 sont portées par un support mobile 48, par exemple rotatif, apte à faire passer chaque matrice d'un premier poste de travail P1 à un second poste de travail P2, puis de celui-ci audit premier poste de travail P1, l'une des matrices 1.1 (ou 1.2) se trouvant au premier poste de travail P1 lorsque l'autre 1.2 (ou 1.1) se trouve au second poste de travail P2 et inversement.

Au premier poste de travail P1, chaque matrice est chargée en cames 3 de la façon décrite ci-dessus. Au second poste de travail P2 est prévu ledit organe d'actionnement commun 44, qui assure le centrage et l'orientation angulaire corrects des cames 3. A ce poste, il est donc possible d'introduire l'arbre tubulaire 2 dans les cames 3 desdites matrices, puis de dudgeonner ledit arbre 2 au moyen d'un dudgeon 49, ledit arbre étant alors en appui contre une butée 50 --par exemple escamotableprévue audit second poste P2.

## Revendications

1. Dispositif (9) pour maintenir en orientation, autour d'un axe de référence (16), une came plate (3) à contour périphérique (4) ovoïde et percée d'un orifice (5) apte à être traversé par un arbre tubulaire (2), dont l'axe est alors confondu avec ledit axe de référence, en vue de la fixation de ladite came sur ledit arbre par dudgeonnage de ce dernier, comportant :
- un corps (17) pourvu d'un passage transversal (20) pour ledit arbre (2) et d'un conduit (21) d'introduction de ladite came (3), ledit conduit d'introduction (21) débouchant, d'un côté, dans ledit passage transversal (20) et, de l'autre, à la périphérie dudit corps (17) ;
- des moyens (23) pour maintenir ladite came (3) dans son conduit d'introduction (21) dans une position d'attente dans laquelle son orifice (5) est au moins approximativement coaxial audit passage transversal (20) ; et **caractérisé par**
- deux premiers coulisseaux (32) espacés et parallèles, montés solidaires en translation dans ledit corps (17), de façon au moins sensiblement orthogonale audit passage transversal (20) pour ledit arbre (2), lesdits premiers coulisseaux (32) étant élastiquement écartés dudit passage transversal par des premiers moyens élastiques (33) avec leurs extrémités externes faisant saillie à l'extérieur dudit corps (17), d'un côté de celui-ci, et leurs extrémités internes disposées en regard d'une partie du contour ovoïde (4) de ladite came (3), lorsque celle-ci est dans ladite position d'attente ;
- deux seconds coulisseaux (37) espacés et parallèles, antagonistes desdits premiers coulisseaux (32) et montés solidaires en translation dans ledit corps (17), de façon au moins sensiblement orthogonale audit passage transversal (20) pour ledit arbre (2), lesdits seconds coulisseaux (37) étant élastiquement écartés dudit passage transversal (20) par des seconds moyens élastiques (38) avec leurs extrémités externes faisant saillie à l'extérieur dudit corps (17), d'un autre côté de celui-ci, et leurs extrémités internes disposées en regard d'une autre partie du contour ovoïde (4) de ladite came (3), lorsque celle-ci est dans ladite position d'attente; et
- une liaison mécanique (40) reliant lesdits premiers et seconds coulisseaux, telle que, lorsque lesdits premiers coulisseaux (32) sont pressés à l'encontre de l'action desdits premiers moyens élastiques (33) pour déplacer les extrémités internes desdits premiers coulisseaux en direction de ladite partie du contour ovoïde (4) de ladite came (3) jusqu'au contact avec celle-ci, lesdits seconds coulisseaux (37) sont pressés par ladite liaison mécanique (40), à l'encontre de l'action desdits seconds moyens élastiques (38) pour déplacer les extrémités internes desdits seconds coulisseaux (37) en direction de ladite autre partie du contour ovoïde (4) de ladite came (3) jusqu'au contact avec celle-ci.

2. Dispositif selon la revendication 1,
**caractérisé en ce que** les longueurs de chacun desdits premiers et seconds coulisseaux (32, 37) sont déterminées par le contour (4) de ladite came (3) et par l'orientation angulaire de celle-ci autour dudit arbre (2).

3. Dispositif selon la revendication 2,
**caractérisé en ce que** lesdits premiers et seconds coulisseaux (32, 37) sont ajustables en longueur.

4. Dispositif selon l'une des revendications 1 à 3,
**caractérisé en ce que** l'écartement entre lesdits premiers coulisseaux (32) et l'écartement entre lesdits seconds coulisseaux (37) sont déterminés par le contour (4) de ladite came (3) et par l'orientation angulaire de celle-ci autour dudit arbre (2).

5. Dispositif selon l'une quelconque des revendications 1 à 4,
**caractérisé en ce que** les extrémités internes desdits premiers et seconds coulisseaux (32, 37) sont pourvues d'organes de roulement (34) pour le contact avec le contour périphérique (4) de ladite came (3).

6. Dispositif selon l'une quelconque des revendications 1 à 5,
**caractérisé en ce que** lesdits moyens (23) de maintien de ladite came (3) dans son conduit d'introduction (21) en position d'attente comportent un presse-flan (24) pressé élastiquement en direction d'une plaque de référence (26) solidaire dudit dispositif, ledit presse-flan étant écarté élastiquement de cette plaque de référence lors de l'introduction à plat de ladite came (3) entre ledit presse-flan (24) et ladite plaque de référence (26).

7. Dispositif selon la revendication 6,
**caractérisé en ce que** lesdits moyens (23) de maintien de la came comportent un système de butée (29) contre lequel ledit presse-flan (24) est pressé élastiquement lorsqu'aucune came (3) ne se trouve en position d'attente, ce système de butée imposant, entre ledit presse-flan et ladite plaque de référence, un écartement minimal (e), qui est inférieur à l'épaisseur (E) de ladite came.

8. Dispositif selon l'une des revendications 6 ou 7,
**caractérisé en ce que** ledit presse-flan (24) comporte un chanfrein (30) sur lequel ladite came (3), lors de son introduction dans ledit conduit d'introduction (21) en direction de sa position d'attente, exerce une pression entraînant l'écartement élastique dudit presse-flan (24) par rapport à ladite plaque de référence (26).

9. Dispositif selon l'une des revendications 6 à 8,
**caractérisé en ce que** lesdits moyens (23) de maintien de la came forment une unité mécanique rapportée et fixée dans ledit circuit d'introduction (21).

10. Dispositif selon l'une quelconque des revendications 1 à 9,
**caractérisé en ce que** ledit corps (17) se présente sous la forme d'une plaque épaisse à faces parallèles (18, 19).

11. Dispositif selon la revendication 10,
**caractérisé en ce que** les coulisses (31) pour lesdits premiers et seconds coulisseaux (32, 37) sont usinées dans une première (18) desdites faces parallèles de ladite plaque, tandis que ledit conduit d'introduction (21) n'est que partiellement usiné dans cette même première face (18), la seconde face (19) de ladite plaque étant usinée pour former partiellement le conduit d'introduction (21) d'une autre plaque dont la première face (18) serait appliquée contre ladite seconde face (19) de ladite plaque.

12. Matrice pour la fabrication par dudgeonnage d'un arbre à cames tubulaire, notamment pour un moteur à explosions, lesdites cames (3) étant réparties le long dudit arbre (2) avec des orientations spécifiques,
**caractérisée en ce qu'**elle comporte autant de dispositifs (9) spécifiés sous l'une quelconque des revendications 1 à 11 que ledit arbre possède de cames, lesdits dispositifs étant assemblés les uns à la suite des autres de façon que leurs passages transversaux (20) soient alignés pour former un canal (22) pour ledit arbre tubulaire (2) et que leurs conduits d'introduction de came (21) se trouvent respectivement à l'emplacement d'une came (3) le long dudit arbre (2).

13. Matrice selon la revendication 12, composée d'une suite de dispositifs tels que ceux spécifiés sous l'une des revendications 10 ou 11,
**caractérisée en ce que** l'épaisseur de la plaque épaisse constituant le corps (17) de chaque dispositif (9) est déterminée par les emplacements que doivent occuper lesdites cames (3), le long dudit arbre (2).

14. Matrice selon la revendication 12, composée d'une suite de dispositifs tels que ceux spécifiés sous l'une des revendications 10 ou 11,
**caractérisée en ce que** les corps (17) de tous les dispositifs (9) présentent une épaisseur identique et **en ce que** des cales d'épaisseur, destinées à être intercalées entre lesdits dispositifs, sont prévues pour respecter les emplacements que doivent occuper, le long dudit arbre (2), lesdites cames (3).

15. Machine pour la fabrication par dudgeonnage d'un arbre à cames tubulaire, notamment pour un moteur à explosions, lesdites cames (3) étant réparties le long dudit arbre (2) avec des orientations spécifiques,
**caractérisée en ce qu'**elle comporte au moins une matrice (1) telle que celle spécifiée sous l'une des revendications 12 à 14 et un organe d'actionnement unique (44) pour presser en commun l'ensemble desdits premiers coulisseaux (32) de ladite matrice, ledit organe d'actionnement étant monté sur ladite machine indépendamment de ladite matrice (1).

16. Machine selon la revendication 15,
**caractérisée en ce qu'**elle comporte une butée pour bloquer, pendant le dudgeonnage, une extrémité dudit arbre tubulaire (2) traversant lesdites cames (3), ladite butée étant montée sur ladite machine, indépendamment de ladite matrice (1), en regard dudit canal (22) pour ledit arbre tubulaire (2).

17. Machine selon l'une des revendications 15 ou 16,
**caractérisée en ce qu'**elle comporte au moins deux telles matrices (1), chacune apte à passer d'au moins un poste de chargement en cames à au moins un poste de dudgeonnage, puis, après déchargement de l'arbre à cames dudgeonné, dudit poste de dudgeonnage audit poste de chargement.

## Claims

1. Device (9) for keeping in orientation, about a reference axis (16), a flat cam (3) with an ovoid peripheral contour (4) and pierced with an orifice (5) capable of being traversed by a tubular shaft (2) whose axis is then indistinguishable from the said reference axis, for the purpose of attaching the said cam to the said shaft by flared jointing the latter, comprising:
- a body (17) provided with a transverse passageway (20) for the said shaft (2) and a duct (21) for inserting the said cam (3), the said insertion duct (21) emerging, on one side, in the said transverse passageway (20) and, on the other side, on the periphery of the said body (17);
- means (23) for retaining the said cam (3) in its insertion duct (21), in a holding position in which its orifice (5) is at least approximately coaxial with the said transverse passageway (20); and **characterized by**
- two first slides (32) spaced apart and parallel, mounted so as to be fixedly attached in translation in the said body (17), in a manner at least substantially orthogonal to the said transverse passageway (20) for the said shaft (2), the said first slides (32) being elastically held apart from the said transverse passageway by first elastic means (33) with their outer ends protruding out of the said body (17), on one side of the latter, and their inner ends placed facing a portion of the ovoid contour (4) of the said cam (3), when the latter is in the said holding position;
- two second slides (37) spaced apart and parallel, opposed to the said first slides (32) and mounted so as to be fixedly attached in translation in the said body (17), in a manner at least substantially orthogonal to the said transverse passageway (20) for the said shaft (2), the said second slides (37) being elastically held apart from the said transverse passageway (20) by second elastic means (38) with their outer ends protruding out of the said body (17), on another side of the latter, and their inner ends placed facing another portion of the ovoid contour (4) of the said cam (3) when the latter is in the said holding position; and
- a mechanical connection (40) connecting the said first and second slides, so that, when the said first slides (32) are pressed against the action of the said first elastic means (33) to move the inner ends of the said first slides in the direction of the said portion of the ovoid contour (4) of the said cam (3) until there is contact with the latter, the said second slides (37) are pressed by the said mechanical connection (40), against the action of the said second elastic means (38) to move the inner ends of the said second slides (37) in the direction of the said other portion of the ovoid contour (4) of the said cam (3) until there is contact with the latter.

2. Device according to Claim 1, **characterized in that** the lengths of each of the said first and second slides (32, 37) are determined by the contour (4) of the said cam (3) and by the angular orientation of the latter about the said shaft (2).

3. Device according to Claim 2, **characterized in that** the said first and second slides (32, 37) are adjustable in length.

4. Device according to one of Claims 1 to 3, **characterized in that** the gap between the said first slides (32) and the gap between the said second slides (37) are determined by the contour (4) of the said cam (3) and by the angular orientation of the latter about the said shaft (2).

5. Device according to any one of Claims 1 to 4, **characterized in that** the inner ends of the said first and second slides (32, 37) are provided with rolling members (34) for contact with the peripheral contour (4) of the said cam (3).

6. Device according to any one of Claims 1 to 5, **characterized in that** the said means (23) for retaining the said cam (3) in its insertion duct (21) in the holding position comprise a blank press (24) pressed elastically in the direction of a reference plate (26) fixedly attached to the said device, the said blank press being held elastically apart from this reference plate when the said cam (3) is inserted flat between the said blank press (24) and the said reference plate (26).

7. Device according to Claim 6, **characterized in that** the said means (23) of retaining the cam comprise an abutment system (29) against which the said blank press (24) is pressed elastically when no cam (3) is in the holding position, this abutment system imposing, between the said blank press and the said reference plate, a minimal gap (e) that is less than the thickness (E) of the said cam.

8. Device according to one of Claims 6 or 7, **characterized in that** the said blank press (24) comprises a bevel (30) on which the said cam (3), when it is inserted into the said insertion duct (21) in the direction of its holding position, exerts a pressure causing the said blank press (24) to move elastically away from the said reference plate (26).

9. Device according to one of Claims 6 to 8, **characterized in that** the said means (23) of retaining the cam form a mechanical unit fitted and attached in the said insertion circuit (21).

10. Device according to any one of Claims 1 to 9, **characterized in that** the said body (17) has the shape of a thick plate with parallel faces (18, 19).

11. Device according to Claim 10, **characterized in that** the runners (31) for the said first and second slides (32, 37) are machined in a first (18) of the said parallel faces of the said plate, while the said insertion duct (21) is only partially machined in this same first face (18), the second face (19) of the said plate being machined to partially form the insertion duct (21) of another plate whose first face (18) would be pressed against the said second face (19) of the said plate.

12. Die for the manufacture by flared jointing of a tubular cam shaft, particularly for a combustion engine, the said cams (3) being distributed along the said shaft (2) with specific orientations, **characterized in that** it comprises as many devices (9) specified under any one of Claims 1 to 11 as the said shaft has cams, the said devices being assembled one after the other so that their transverse passageways (20) are aligned to form a channel (22) for the said tubular shaft (2) and that their cam insertion ducts (21) are respectively in the location of a cam (3) along the said shaft (2).

13. Die according to Claim 12, consisting of a series of devices as specified under one of Claims 10 or 11, **characterized in that** the thickness of the thick plate forming the body (17) of each device (9) is determined by the locations that the said cams (3) are to occupy along the said shaft (2).

14. Die according to Claim 12, consisting of a series of devices as specified in one of Claims 10 or 11, **characterized in that** the bodies (17) of all the devices (9) have an identical thickness and **in that** thickness spacers, designed to be inserted between the said devices, are provided to comply with the locations that the said cams (3) are to occupy along the said shaft (2).

15. Machine for the manufacture by flared jointing of a tubular cam shaft, particularly for a combustion engine, the said cams (3) being distributed along the said shaft (2) with specific orientations, **characterized in that** it comprises at least one die (1) as specified under one of Claims 12 to 14 and a single actuation member (44) to jointly press all of the said first slides (32) of the said die, the said actuation member being mounted on the said machine independently of the said die (1).

16. Machine according to Claim 15, **characterized in that** it comprises an abutment to immobilize, during the flared jointing, one end of the said tubular shaft (2) traversing the said cams (3), the said abutment being mounted on the said machine, independently of the said die (1), facing the said channel (22) for the said tubular shaft (2).

17. Machine according to one of Claims 15 or 16, **characterized in that** it comprises at least two such dies (1), each able to travel from at least one cam loading position to at least one flared jointing position, then, after unloading the flared-jointed cam shaft, from the said flared jointing position to the said loading position.

## Patentansprüche

1. Vorrichtung (9), um die Ausrichtung um eine Bezugsachse (16) einer flachen Nocke (3) mit ovaler Umfangskontur (4) und einer Öffnung (5), durch die eine röhrenförmige Welle (2) hindurchgehen kann, deren Achse nun mit der Bezugsachse zusammenfällt, um die Nocke auf der Welle durch Einwalzen dieser letztgenannten zu befestigen, aufrecht zu erhalten, umfassend:
- einen Körper (17), der mit einem Querdurchgang (20) für die Welle (2) und einer Leitung (21) zur Einführung der Nocke (3) versehen ist, wobei die Einführungsleitung (21) auf einer Seite in den Querdurchgang (20) und auf der anderen Seite an der Peripherie des Körpers (17) mündet;
- Mittel (23), um die Nocke (3) in ihrer Einführungsleitung (21) in einer Wartestellung zu halten, in der ihre Öffnung (5) zumindest annähernd zum Querdurchgang (20) koaxial ist,
und **gekennzeichnet durch**:
- zwei erste Gleitschieber (32), die in einem Abstand und parallel zueinander angeordnet sind und hinsichtlich der Translation fest im Körper (17) auf mindestens im Wesentlichen orthogonale Weise zum Querdurchgang (20) für die Welle (2) montiert sind, wobei die ersten Gleitschieber (32) elastisch vom Querdurchgang **durch** erste elastische Mittel (33) beabstandet sind, deren äußere Enden aus dem Körper (17) auf einer Seite desselben hinausragen, wobei ihre inneren Enden gegenüber einem Teil der ovalen Kontur (4) der Nocke (3) angeordnet sind, wenn sich diese in Wartestellung befindet;
- zwei zweite Gleichschieber (37), die in einem Abstand und parallel zueinander angeordnet und zu den ersten Gleitschiebern (32) antagonistisch sind, und die hinsichtlich der Translation fest im Körper (17) auf mindestens im Wesentlichen orthogonale Weise zum Querdurchgang (20) für die Welle (2) montiert sind, wobei die zweiten Gleitschieber (37) elastisch von dem Querdurchgang (20) **durch** zweite elastische Mittel (38) beabstandet sind, deren äußere Enden aus dem Körper (17) auf einer anderen Seite desselben hinausragen, wobei ihre inneren Enden gegenüber einem anderen Teil der ovalen Kontur (4) der Nocke (3) angeordnet sind, wenn sich diese in Wartestellung befindet; und
- eine mechanische Verbindung (40), die die ersten und zweiten Gleitschieber derart verbindet, dass, wenn die ersten Gleitschieber (32) gegen die Wirkung der ersten elastischen Mittel (33) gedrückt werden, um die inneren Enden der ersten Gleitschieber in Richtung des Teils der ovalen Kontur (4) der Nocke (3) bis zum Kontakt mit derselben zu verschieben, die zweiten Gleitschieber (37) **durch** die mechanische Verbindung (40) gegen die Wirkung der zweiten elastischen Mittel (38) gedrückt werden, um die inneren Enden der zweiten Gleitschieber (37) in Richtung des anderen Teils der ovalen Kontur (4) der Nocke (3) bis zum Kontakt mit derselben zu verschieben.

2. Vorrichtung nach Anspruch 1, **dadurch gekennzeichnet, dass** die Längen jedes der ersten und zweiten Gleitschieber (32, 37) durch die Kontur (4) der Nocke (3) und durch die Winkelausrichtung derselben um die Welle (2) bestimmt werden.

3. Vorrichtung nach Anspruch 2, **dadurch gekennzeichnet, dass** die ersten und zweiten Gleitschieber (32, 37) in der Länge einstellbar sind.

4. Vorrichtung nach einem der Ansprüche 1 bis 3, **dadurch gekennzeichnet, dass** der Abstand zwischen den ersten Gleitschiebern (32) und der Abstand zwischen den zweiten Gleitschiebern (37) durch die Kontur (4) der Nocke (3) und durch die Winkelausrichtung derselben um die Welle (2) bestimmt werden.

5. Vorrichtung nach einem der Ansprüche 1 bis 4, **dadurch gekennzeichnet, dass** die inneren Enden der ersten und zweiten Gleitschieber (32, 37) mit Rollelementen (34) für den Kontakt mit der Umfangskontur (4) der Nocke (3) versehen sind.

6. Vorrichtung nach einem der Ansprüche 1 bis 5, **dadurch gekennzeichnet, dass** die Mittel (23) zum Halten der Nocke (3) in ihrer Einführungsleitung (21) in Wartestellung eine Plattenpresse (24) umfassen, die elastisch in Richtung einer Bezugsplatte (26), die mit der Vorrichtung verbunden ist, gedrückt wird, wobei die Plattenpresse elastisch von dieser Bezugsplatte bei der flachen Einführung der Nocke (3) zwischen der Plattenpresse (24) und der Bezugsplatte (26) entfernt wird.

7. Vorrichtung nach Anspruch 6, **dadurch gekennzeichnet, dass** die Mittel (23) zum Halten der Nocke ein Anschlagsystem (29) umfassen, gegen das die Plattenpresse (24) elastisch gedrückt wird, wenn sich keine Nocke (3) in Warteposition befindet, wobei dieses Anschlagsystem zwischen der Plattenpresse und der Bezugsplatte einen Mindestabstand (e) erfordert, der kleiner als die Dicke (E) der Nocke ist.

8. Vorrichtung nach einem der Ansprüche 6 oder 7, **dadurch gekennzeichnet, dass** die Plattenpresse (24) eine Schräge (30) umfasst, auf die die Nocke (3) bei ihrer Einführung in die Einführungsleitung (21) in Richtung ihrer Wartestellung einen Druck ausübt, der zur elastischen Entfernung der Plattenpresse (24) in Bezug auf die Bezugsplatte (26) führt.

9. Vorrichtung nach einem der Ansprüche 6 bis 8, **dadurch gekennzeichnet, dass** die Mittel (23) zum Halten der Nocke eine aufgesetzte mechanische Einheit bilden, die in der Einführungsschaltung (21) befestigt ist.

10. Vorrichtung nach einem der Ansprüche 1 bis 9, **dadurch gekennzeichnet, dass** der Körper (17) in Form einer dicken Platte mit parallelen Seiten (18, 19) vorhanden ist.

11. Vorrichtung nach Anspruch 10, **dadurch gekennzeichnet, dass** die Gleitführungen (31) für die ersten und zweiten Gleitschieber (32, 37) in eine erste (18) der parallelen Seiten der Platte eingearbeitet sind, während die Einführungsleitung (21) nur teilweise in diese selbe erste Seite (18) eingearbeitet ist, wobei die zweite Seite (19) der Platte derart ausgeführt ist, dass sie teilweise die Einführungsleitung (21) einer anderen Platte bildet, deren erste Seite (18) an die zweite Seite (19) der Platte angelegt wird.

12. Matrix für die Herstellung einer röhrenförmigen Nockenwelle durch Einwalzen, insbesondere für einen Verbrennungsmotor, wobei die Nocken (3) entlang der Welle (2) mit spezifischen Ausrichtungen verteilt sind, **dadurch gekennzeichnet, dass** sie ebenso viele Vorrichtungen (9) nach einem der Ansprüche 1 bis 11 wie die Welle Nocken umfasst, besitzt, wobei die Vorrichtungen nacheinander derartig zusammengebaut sind, dass ihre Querdurchgänge (20) ausgerichtet sind, um einen Kanal (22) für die röhrenförmige Welle (2) zu bilden, und dass ihre Einführungsleitungen der Nocke (21) jeweils an der Stelle einer Nocke (3) entlang der Welle (2) angeordnet sind.

13. Matrix nach Anspruch 12, bestehend aus einer Folge von Vorrichtungen nach einem der Ansprüche 10 oder 11, **dadurch gekennzeichnet, dass** die Dicke der dicken Platte, die den Körper (17) jeder Vorrichtung (9) darstellt, durch die Stellen bestimmt ist, die die Nocken (3) entlang der Welle (2) einnehmen sollen.

14. Matrix nach Anspruch 12, bestehend aus einer Folge von Vorrichtungen nach einem der Ansprüche 10 oder 11, **dadurch gekennzeichnet, dass** die Körper (17) aller Vorrichtungen (9) eine identische Dicke aufweisen, und dass Dickenkeile, die dazu bestimmt sind, zwischen den Vorrichtungen angeordnet zu werden, vorgesehen sind, um die Stellen einzuhalten, die die Nocken (3) entlang der Welle (2) einnehmen sollen.

15. Maschine zur Herstellung einer röhrenförmigen Nockenwelle durch Einwalzen, insbesondere für einen Verbrennungsmotor, wobei die Nocken (3) entlang der Welle (2) mit spezifischen Ausrichtungen verteilt sind, **dadurch gekennzeichnet, dass** sie mindestens eine Matrix (1) nach einem der Ansprüche 12 bis 14 und ein einziges Betätigungselement (44) umfasst, um gemeinsam die Einheit der ersten Gleitschieber (32) der Matrix zu drücken, wobei das Betätigungselement auf der Maschine unabhängig von der Matrix (1) montiert ist.

16. Maschine nach Anspruch 15, **dadurch gekennzeichnet, dass** sie einen Anschlag umfasst, um während des Einwalzens ein Ende der röhrenförmigen Welle (2), die durch die Nocken (3) hindurchgeht, festzustellen, wobei der Anschlag auf der Maschine unabhängig von der Matrix (1) gegenüber dem Kanal (22) für die röhrenförmige Welle (2) montiert ist.

17. Maschine nach einem der Ansprüche 15 oder 16, **dadurch gekennzeichnet, dass** sie mindestens zwei solcher Matrices (1) umfasst, wobei jede von mindestens einer Nockenaufgabestation zu einer Einwalzstation übergehen kann, und dann nach der Entnahme der Welle mit eingewalzten Nocken von der Einwalzstation zur Aufgabestation.
